**Europäisches Patentamt**

**European Patent Office**

**Office européen des brevets**

(19)

(11) Veröffentlichungsnummer : **0 352 436 B1**

(12) # EUROPÄISCHE PATENTSCHRIFT

(45) Veröffentlichungstag der Patentschrift :
27.12.91 Patentblatt 91/52

(51) Int. Cl.⁵ : **F01L 1/34**

(21) Anmeldenummer : 89109645.5

(22) Anmeldetag : 29.05.89

(54) **Vorrichtung zur relativen Winkelverstellung zwischen zwei in Antriebsverbindung stehenden Wellen.**

(30) Priorität : 23.07.88 DE 3825074

(43) Veröffentlichungstag der Anmeldung :
31.01.90 Patentblatt 90/05

(45) Bekanntmachung des Hinweises auf die
Patenterteilung :
27.12.91 Patentblatt 91/52

(84) Benannte Vertragsstaaten :
FR GB IT SE

(56) Entgegenhaltungen :
EP-A- 0 245 791
DE-A- 3 605 679
FR-A- 1 085 087
US-A- 2 665 569
US-A- 4 091 776

(73) Patentinhaber : **Daimler-Benz
Aktiengesellschaft
Postfach 600202 Mercedesstrasse 136
W-7000 Stuttgart 60 (DE)**

(72) Erfinder : **Ohlendorf, Rolf
Nonnenbergstrasse 14
W-7056 Weinstadt (DE)**
Erfinder : **Treyz, Willy
Eichendorffstrasse 4
W-7441 Neckartailfingen (DE)**
Erfinder : **Doll, Gerhard
Bachgartenstrasse 55
W-7127 Pleidelsheim (DE)**
Erfinder : **Speier, Wolfgang
Burgholzweg 87/1
W-7400 Tübingen (DE)**

EP 0 352 436 B1

## Beschreibung

Die Erfindung betrifft eine Vorrichtung nach dem Oberbegriff des Patentanspruchs 1.

Aus der DE-OS 3126620 ist eine Vorrichtung zur Veränderung der Phaseneinstellung zwischen einer Motorwelle und einer Steuerwelle bei Motoren, die für Einlaßventile und Auslaßventile zwei getrennte Steuerwellen aufweisen, bekannt, welche es gestattet, zwischen zwei verschiedenen Steuerzeiteneinstellungen zu wechseln. Jede der beiden Steuerzeiteneinstellungen entspricht einer Endstellung eines beweglichen Antriebsorgans, welches über Kupplungen, von denen mindestens eine mit einer Schrägverzahnung versehen ist, mit einer Motorwelle und einer Steuerwelle verbunden ist und durch Axialverschiebung eine Verdrehung der Steuerwelle relativ zur Motorwelle bewirkt. Die Verstellung des Antriebsorgans in eine der Endstellungen erfolgt durch die Vorspannung einer Feder, die Verstellung in die andere Endstellung über Drucköl aus dem Motorölkreislauf. Ein fliehkraftbetätigter Schieber nimmt abhängig von der Motordrehzahl drei verschiedene Stellungen ein, in denen er Ölabflußbohrungen entsprechend öffnet und schließt und damit den Öldruck auf das Antriebsorgan steuert. In einer eine Ölabflußbohrung öffnenden Stellung des Schiebers unterhalb einer bestimmten Motordrehzahl wirkt auf das Antriebsorgan nur eine Federkraft ein, die das Antriebsorgan in einer Endstellung hält.

Überschreitet die Motordrehzahl diesen ersten Schwellwert, so schließt der Schieber die Ölabflußbohrung aufgrund der Fliehkraftänderung und das Antriebsorgan wird durch den steigenden Motoröldruck entgegen der Federspannung axial in eine zweite Endstellung verschoben, wobei eine Relativdrehung zwischen Motorwelle und Steuerwelle stattfindet und dadurch eine diesem Motorbetriebszustand angepaßte Steuerzeiteneinstellung erreicht wird. Nach Überschreiten eines weiteren Schwellwerts für die Motordrehzahl wird der Schieber in eine Stellung bewegt, die einen Ölabfluß wieder ermöglicht. Durch die Federkraft wird das Antriebsorgan wieder in seine erste Endstellung mit entsprechender Relativverdrehung zurückbewegt. Auf die gleiche Weise erfolgt auch die Verstellung des Antriebsorgans bei Unterschreiten der Schwellwerte für die Motordrehzahl.

Auch die DE-OS 3316162 zeigt eine vergleichbare Vorrichtung, nur mit dem Unterschied, daß die Betätigung des Antriebsorgans nicht durch Fliehkräfte gesteuert wird, sondern der den Ölfluß steuernde Schieber elektromagnetisch betätigbar ist.

Beide genannten Vorrichtungen weisen den Nachteil auf, daß die Steuerung über eine Beeinflussung des Ölabflusses erfolgt. In einer der beiden Arbeitsstellungen des Antriebsorgans ist ein ständiger Ölfluß mit den damit verbundenen Verlusten gegeben.

Ein weiterer Nachteil besteht darin, daß bei einem Rückstellvorgang in die Ausgangsstellung das durch die Federkraft vom Antriebsorgan aus dem Arbeitsraum gedrückte Öl durch die gleiche Ölabflußbohrung abgeführt werden muß, durch die auch das in dieser Stellung des Schiebers ständig fließende Öl geführt wird. Aus dieser Tatsache resultiert eine unerwünschte Verlangsamung des Rückstellvorganges.

Bei niedrigen Motordrehzahlen, z.B. im Leerlaufbetrieb, ist der Öldruck zu gering, um eine Verstellung bewirken zu können. Aus diesem Grunde muß das Antriebsorgan durch Federkraft in die diesem Betriebszustand entsprechende Stellung gebracht werden. Eine derartige Federkraft kann jedoch bei niedriger Drehzahl und folglich auch niedrigem Öldruck eine Verstellung des Antriebsorgans durch Drucköl in den Zeitabschnitten, in denen ein hemmendes Nockenwellenmoment vorliegt, verhindern, so daß eine Verstellung nur bei antreibendem Nockenwellenmoment also intermittierend, erfolgen kann. Um die durch die Federkraft zusammen mit dem Nockenwellenmoment verursachte unerwünschte Rückstellung des Antriebsorgans zu vermeiden, muß die Schrägverzahnung selbsthemmend, also mit flachem Schrägungswinkel, ausgebildet sein. Ein solcher Schrägungswinkel läßt aber auch nur einen kurzen Verstellweg zu, d.h. die relative Winkelverstellung zwischen Motorwelle und Steuer- bzw. Nockenwelle ist gering und damit auch der Einfluß einer Steuerzeitenveränderung.

Aufgabe der Erfindung ist es, unter Vermeidung der genannten Nachteile, eine Vorrichtung der gattungsgemäßen Art zu schaffen, die in kompakter und einfacher Ausführungsform eine schnelle und sichere Winkelverstellung gewährleistet.

Die Aufgabe wird erfindungsgemäß durch die im kennzeichnenden Teil des Patentanspruchs 1 genannten Merkmale gelöst. Weitere Ausgestaltungen und Vorteile der Erfindung gehen aus den Unteransprüchen und der Beschreibung hervor.

Auf einem als Hohlwelle ausgebildeten Kettenradträger ist ein Kettenrad angebracht, welches von einer Kurbelwelle über eine Kettenverbindung angetrieben wird. Die offene Seite des Kettenradträgers wird durch die Nockenwelle verschlossen, die mit einer koaxial zur Kettenradträgerachse verlaufenden hohlen Flanschwelle fest verbunden ist.

Kettenradträger, Nockenwelle und Flanschwelle bilden zusammen einen ringförmigen Hohlraum, der durch ein als Drehflügel ausgebildetes Stellelement, welches um eine parallel zur Nockenwelle verlaufende Achse zwischen zwei Endstellungen schwenkbar gelagert ist, in zwei Arbeitsräume unterteilt ist. In der hohlen Flanschwelle ist ein zwei Arbeitsstellungen aufweisender, von einer Feder in einer dieser Arbeitsstellungen gehaltener und durch einen mit ihm fest verbundenen Anker eines maschinenfesten Elektromagneten in die andere Arbeitsstellung gegen die Federkraft axial beweglicher Steuerkolben angeordnet, der je nach seiner Stellung die Zufuhr von Drucköl aus dem Motorölkreislauf über die Ölbohrung der Nockenwelle in einen der Arbeitsräume und den Abfluß von Öl aus dem jeweiligen anderen Arbeitsraum gewährleistet. Der Drehflügel wird in beiden Richtungen nur hydraulisch verstellt und benötigt daher für die Rückstellung keine gesonderte Federkraft. Bei der Verstellung muß also keine Federkraft überwunden werden und es läßt sich dadurch ein größeres Stellmoment realisieren. Der Wegfall der Feder erlaubt somit auch eine Verstellung im niedrigen Drehzahlbereich, also beinur geringem Motoröldruck. Im Gegensatz zur gattungsbildenden DE-OS 3126620 findet auch kein ständiger Ölfluß statt, sondern nur während eines Verstellvorgangs bis zum Erreichen einer der beiden Arbeitsstellungen.

In der Grundstellung ist der Elektromagnet stromlos und der Steuerkolben wird durch die Feder in der einen Endstellung gehalten. Nach dem Einschalten des Magneten wird der Steuerkolben entgegen der Federkraft in die andere Endstellung bewegt. Durch das dadurch erfolgende Zuführen von Drucköl in einen der beiden Arbeitsräume wird der Drehflügel verschwenkt und verdreht über die Abstützung einer an ihm angebrachten Nase an einer an der Innenseite der das Antriebsrad tragenden Hohlwelle vorgesehenen Kulisse die Flanschwelle -und damit auch die Nockenwelle- relativ zum von der Kurbelwelle angetriebenen Kettenrad. Durch die axiale Verschwenkung des Drehflügels wird aus dem jeweils anderen Arbeitsraum Öl ausgeschoben und in den Motorölkreislauf zurückgeführt. Beim Ausschalten des Elektromagneten kehrt der Steuerkolben mit Hilfe der Federkraft in seine Ausgangsstellung zurück, führt dem anderen Arbeitsraum Drucköl zu und gibt den Ölabfluß aus dem bisher unter Druck stehenden Arbeitsraum frei. Durch diesen erneuten Stellvorgang wird die vorher erfolgte Relativverdrehung wieder rückgängig gemacht.

Ein Ausführungsbeispiel der Erfindung sei nachstehend anhand der Zeichnung erläutert. Es zeigt

Figur 1    eine erfindungsgemäße Vorrichtung im Längsschnitt,

Figur 2    einen Schnitt durch eine erfindungsgemäße Vorrichtung gemäß Schnittlinie II-II in Figur 1.

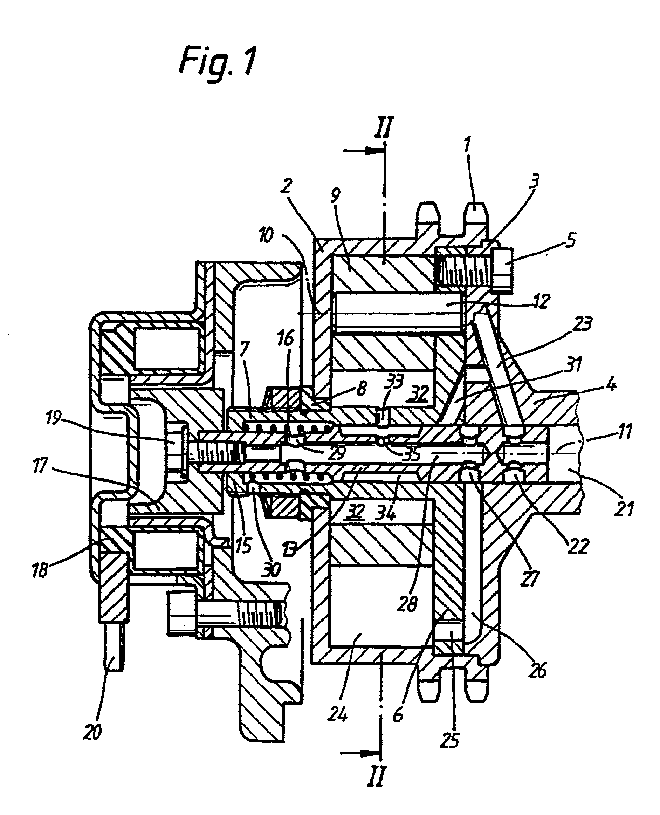

Figur 1 zeigt eine erfindungsgemäße Verstellvorrichtung. Ein durch eine nicht gezeigte Kette von einer ebenfalls nicht gezeigten Kurbelwelle angetriebenes Kettenrad 1 sitzt auf einem als Hohlwelle ausgebildeten Kettenradträger 2. Dieser Kettenradträger 2 stützt sich an seiner einen Seite verdrehbar an einem Ende 3 einer Nockenwelle 4 sowie einer mit dieser Nockenwelle 4 über eine Schraubverbindung 5 fest verbundenen Endplatte 6 einer Flanschwelle 7 ab. Die andere Seite des Kettenradträgers 2 ist drehbar auf einem die Flanschwelle 7 umgebenden maschinengehäusefesten Deckel 8 gelagert. Kettenradträger 2 sowie Endplatte 6 und Flanschwelle 7 bilden zusammen mit dem Deckel 8 einen ringförmigen Raum, in dem ein Drehflügel 9 schwenkbar an einem mit seiner Achse 10 parallel zur Achse 11 der Nockenwelle 4 verlaufenden, in der Endplatte 6 gelagerten Bolzen 12 befestigt ist.

In der hohlen Flanschwelle 7 ist ein axial verschiebbarer Steuerkolben 13 angeordnet, der durch eine sich an einem Ende 15 der Flanschwelle 7 abstützende Feder 16 in seine Grundstellung in Richtung der Nockenwelle 4 gedrückt wird. An der der Nockenwelle 4 abgewandten Seite des mit der Verstellvorrichtung rotierenden Steuerkolbens 13 ist mit diesem ein Anker 17 eines maschinenfesten Elektromagneten 18 über eine Verschraubung 19 verbunden. Der Elektromagnet 18 ist als Ringmagnet ausgebildet, in dem der Anker 17 frei drehbar eingetaucht ist. Über einen Anschluß 20 ist der Elektromagnet 18 mit einem hier nicht dargestellten Steuergerät elektrisch verbunden. Beim Anlegen einer elektrischen Spannung an den Elektromagneten 18 durch das Steuergerät wird der rotierende Anker 17 in Richtung des Elektromagneten 18 bewegt und bringt dadurch den fest mit ihm verbundenen Steuerkolben 13 gegen die Kraft der Feder 16 aus seiner Grundstellung in die Arbeitsstellung. Dabei ist der axiale Verstellweg so gewählt, daß der Anker 17 in seiner Arbeitsstellung nicht mit einem Gehäuseteil des Elektromagneten 18 in Berührung kommt. Auf diese Weise tritt keine Reibung zwischen dem rotierenden Anker 17 und dem feststehenden Gehäuse -und folglich auch keine Abnutzung- auf. Der Steuerkolben 13 bleibt solange in dieser Arbeitsstellung, wie an dem Elektromagneten 18 Spannung anliegt und kehrt erst nach Abschalten dieser Spannung, durch die Kraft der Feder 16 betätigt, in seine Grundstellung in Richtung zur Nockenwelle 4 zurück.

Im spannungslosen Zustand des Elektromagneten 18 befindet sich der Steuerkolben 13 -durch die Kraft der Feder 16 gehalten- in seiner hier gezeigten Grundstellung. Über eine Öllängsbohrung 21 in der Nockenwelle 4, eine Querbohrung 22 im Steuerkolben 13 und eine Verbindungsbohrung 23 gelangt Schmieröl unter Druck aus dem Motorölkreislauf in einen in dieser Figur nicht sichtbaren Arbeitsraum. Gleichzeitig gelangt Öl, das aufgrund der aus der Füllung des ersten Arbeitsraumes resultierenden Verschwenkung des Drehflügels 9 aus dem zweiten Arbeitsraum 24 verdrängt wird, über die Ölbohrungen 25 und 26 in eine zweite Querbohrung 27 des Steuerkolbens 13 und von dort durch eine Längsbohrung 28 und zwei weitere Querbohrungen 29, 30 in nicht näher dargestellter Weise zurück in den Motorölkreislauf.

Durch das Steuergerät betätigt, zieht der Elektromagnet 18 den Anker 17 und den mit diesem verbundenen Steuerkolben 13 gegen die Kraft der Feder 16 soweit an, daß der Zufluß von Drucköl aus dem Motorölkreislauf über die Öllängsbohrung 21 der Nockenwelle 4 zur Verbindungsbohrung 23 gesperrt wird. Drucköl gelangt nun über die Querbohrung 22 des Steuerkolbens 13 und die Ölbohrungen 26 und 25 in den zweiten Arbeitsraum 24, in dem es eine Verschwenkung des Drehflügels 9 in umgekehrter Richtung zum oben beschriebenen Vorgang bewirkt. Das durch diese Verschwenkbewegung aus dem ersten Arbeitsraum verdrängte Öl gelangt über die Ölbohrungen 23, 31, 27, 28, 29 und 30 ebenfalls zurück in den Motorölkreislauf.

Das aus den Arbeitsräumen in den die Flanschwelle 7 umfassenden drucklosen Hohlraum 32 des Drehflügels 9 gelangende Lecköl wird über eine Entlüftungsbohrung 33 und eine den Ringspalt 34 des Steuerkolbens 13 mit der Öllängsbohrung 28 verbindende Bohrung 35 abgeführt.

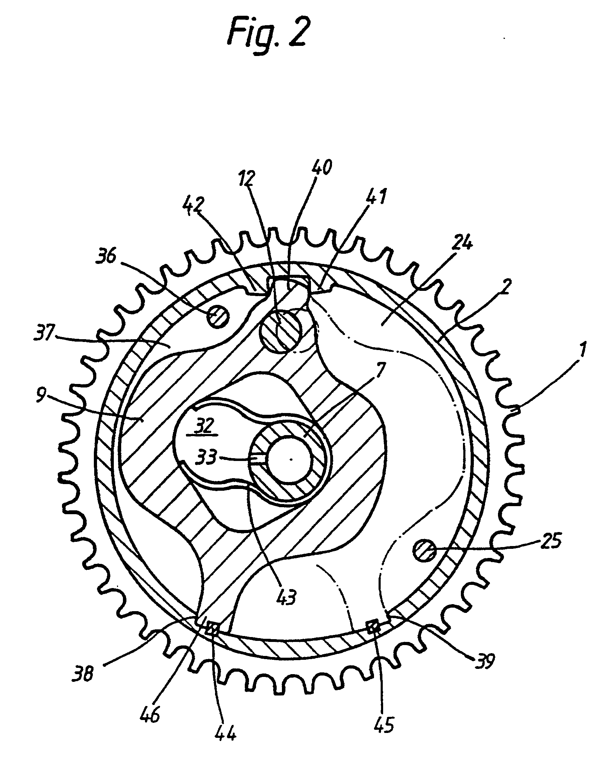

In dem in Figur 2 dargestellten Schnitt durch die erfindungsgemäße Vorrichtung gemäß Schnittlinie II-II in Figur 1 tragen die mit Figur 1 übereinstimmenden Teile die gleichen Bezugszeichen.

Mit 1 ist wieder das auf dem Kettenradträger 2 sitzende Kettenrad und mit 7 die Flanschwelle bezeichnet. Der Übersichtlichkeit halber ist der in der Flanschwelle 7 angeordnete Steuerkolben nicht eingezeichnet. In der Grundstellung des Steuerkolbens gelangt Drucköl über eine Öffnung 36 der hier nicht sichtbaren Verbindungsbohrung 23 in den ersten Arbeitsraum 37. Dadurch wird der Drehflügel 9, der über den Bolzen 12 in der Endplatte der Flanschwelle 7 schwenkbar gelagert ist, aus seiner Lage an der Anschlagkante 38 herausgedrückt und in seine gestrichelt angedeutete Stellung an der anderen Anschlagkante 39 gebracht. Bei dieser Schwenkbewegung verdrängt der Drehflügel 9 das Öl aus dem zweiten Arbeitsraum 24, von wo aus es über die Bohrung 25, wie oben beschrieben, wieder dem Motorölkreislauf zugeführt wird. Bei seiner Verschwenkung um den Bolzen 12 stützt sich der Drehflügel 9 mit einer an ihm angebrachten Nase 40 an einer Kulisse 41, 42 ab, die an der Innenseite des Kettenradträgers 2 angeordnet ist. Dadurch erfolgt eine Relativverdrehung zwischen dem die Kulisse 41, 42 tragenden Kettenradträger 2 einerseits und der den Bolzen 12 des Drehflügels 9 tragenden Endplatte des Flanschwelle 7 und damit auch der Nockenwelle andererseits.

In der oben beschriebenen Arbeitsstellung des Steuerkolbens gelangt Drucköl über die Bohrung 25 in den zweiten Arbeitsraum 24 und bewirkt damit eine erneute Verschwenkung des Drehflügels 9, wodurch das im Arbeitsraum 37 befindliche Öl über die Öffnung 36 dem Motorölkreislauf zugeführt wird und eine Relativverdrehung in umgekehrter Richtung erfolgt.

Lecköl aus den beiden Arbeitsräumen 24 und 37 sammelt sich in dem die Flanschwelle 7 umgebenden Hohlraum 32 des Drehflügels 9, von wo aus es über eine Entlüftungsbohrung 33 in bekannter, oben beschriebener Weise dem Motorölkreislauf zugeführt wird.

Bei geringem Motoröldruck, wie er z.B. beim Startvorgang oder in der Leerlaufphase auftritt, kann der Drehflügel 9 unkontrollierte Schwenkbewegungen ausführen, die Klappergeräusche verursachen. Dies ist vor allem bei Motoren mit stark wechselnden Nockenwellenmomenten der Fall. Um ein solches Klappern zu vermeiden, sieht die Erfindung ein Federelement vor, das den Drehflügel 9 in seiner jeweiligen Endstellung unter Vorspannung hält. Dieses Federelement ist als Federklammer 43 ausgelegt, die eine einseitig offene, ovale, in ihrer Mitte eingeschnürte Form aufweist. Die Federklammer 43 liegt an der Innenseite des die Flanschwelle 7 umfassenden Hohlraums 32 im Drehflügel 9 an und umgreift in der einen Endstellung des Drehflügels 9 die Flanschwelle 7. Durch die Einschnürung der Federklammer 43 wird der Drehflügel 9 in dieser Endstellung gehalten und ein Klappern wird verhindert. Erst wenn der Öldruck im Arbeitsraum über einen bestimmten Wert ansteigt, kann die Spannung der Federklammer 43 überwunden werden und der Drehflügel 9 bewegt sich unter Aufweitung der Einschnürungsstelle der Federklammer 43 durch die Flanschwelle 7 in seine andere Endstellung, in der er -gegen Klappern wieder gesichert- durch die Federklammer 43 gehalten wird.

Eine zweite Möglichkeit zur Sicherung des Drehflügels 9 gegen Klappern besteht darin, den Drehflügel 9 in seinen beiden Endstellungen an den Anschlagkanten 38 und 39 durch federnde Rastelemente zu halten. Ein solches Rastelement kann beispielsweise aus, hier nur schematisch gezeigten, bekannten Kugel-Feder-Elementen 44, 45 bestehen, die zwischen dem Kettenradträger 2 und einer Nase 46 des Drehflügels 9 wirken.

**Patentansprüche**

1. Vorrichtung zur relativen Winkelverstellung zwischen einer Kurbelwelle und mindestens einer Nockenwelle, wobei die Nockenwelle an ihrer antriebsseitigen Flanschwelle (7) über ein Stellelement (9) formschlüssig mit einer dieses umgebenden, ein Antriebsrad (1) tragenden, zylindrischen Hohlwelle (2) verbunden ist und wobei das Stellelement (9) einen aus Hohlwelle (2) und Flanschwelle (7) gebildeten Ringraum in zwei getrennte Arbeitsräume (37, 24) unterteilt und das Stellelement (9) durch vom Motorölkreislauf geliefertes und in diesen wieder zurückgeführtes Drucköl in Abhängigkeit von der Stellung eines in der Flanschwelle befindlichen Steuerelements (13) wechselseitig mit Drucköl beaufschlagt wird, **dadurch gekennzeichnet,** daß das Stellelement (9) als eine Schwinge (9) ausgebildet ist, die einerseits an der Flanschwelle (7) um eine parallel zur Nockenwellenachse (11) verlaufende Drehachse (10) schwenkbar gelagert ist und andererseits mit der Hohlwelle 2 in Eingriff steht, wobei die Schwinge im Ringraum zwischen Hohlwelle und Flanschwelle zwei Endstellungen einnehmen kann.

2. Vorrichtung nach Anspruch 1, **dadurch gekennzeichnet,** daß in einem die Flanschwelle (7) umgebenden Hohlraum (32) der Schwinge (9) ein die Schwinge (9) in ihrer jeweiligen Endstellung unter Vorspannung haltendes Federelement (43) vorgesehen ist.

3. Vorrichtung nach Anspruch 2, **dadurch gekennzeichnet,** daß das Federelement (43) aus einer die Flanschwelle (7) um mehr als die Hälfte der Umfangslänge dieser Welle umfassenden, an mindestens zwei Stellen innen an der Schwinge (9) anliegenden Federklammer (43) besteht.

4. Vorrichtung nach einem der Ansprüche 1 bis 3, **dadurch gekennzeichnet,** daß die beiden Endstellungen der Schwinge (9) durch zwei die Schwenkbewegung der Schwinge (9) begrenzende Anschlagkanten (38, 39) an der Hohlwelle (2) definiert sind.

5. Vorrichtung nach einem der Ansprüche 1 bis 4, **dadurch gekennzeichnet,** daß die Schwinge (9) in jeder Endstellung an der jeweiligen Anschlagkante (38, 39) durch je ein federndes Rastelement (44, 45) gehalten ist.

6. Vorrichtung nach einem der Ansprüche 1 bis 5, **dadurch gekennzeichnet,** daß die Schwinge (9) mit einer Nase (40) in eine an der Innenseite der Hohlwelle (2) angebrachte Kulisse (41, 42) eingreift.

7. Vorrichtung nach einem der Ansprüche 1 bis 6, **dadurch gekennzeichnet,** daß die Flanschwelle (7) eine Querbohrung (33) aufweist, welche das im Innern der Flanschwelle (7) angeordnete Steuerelement 13 mit dem Hohlraum (32) der Schwinge (9) verbindet.

## Claims

1. A device for making a relative angular adjustment between a crankshaft and at least one camshaft, the camshaft being at its drive-end flange shaft (7) positively connected by a positioning element (9) to a cylindrical hollow shaft (2) carrying a driving wheel (1) and enclosing time positioning element (9), this latter subdivided into two separate working chambers (37, 24) an annular space formed by a hollow shaft (2) and a flange shaft (7), the positioning element (9) having pressurised fluid applied to it alternately and as a function of the position of a control element (13) disposed in the flange shaft, pressurised oil supplied by the engine oil circuit and fed back to that circuit, characterised in that the positioning element (9) is constructed as a rocker (9) which at one end is mounted on the flange shaft (7) to pivot about an axis of rotation (10) which extends parallel with the camshaft axis (11) while on the other it engages the hollow shaft (2), the rocker being capable of assuming two extreme positions in the annular space between the hollow shaft and the flange shaft.

2. A device according to claim 1, characterised in that in a hollow space (32) in the rocker (9) and which surrounds the flange shaft (7) there is a spring element (43) which maintains the rocker (9) under initial tension in whichever is the appropriate extreme position.

3. A device according to claim 2, characterised in that the spring element (43) consists of a spring clamp (43) which engages around more than half the peripheral length of this shaft and which bears on the inside of the rocker (9) at two locations at least.

4. A device according to one of claims 1 to 3, characterised in that the two extreme positions of the rocker (9) are defined by two abutment edges (38, 39) on the hollow shaft (2) which define the pivoting movement of the rocker (9).

5. A device according to one of claims 1 to 4, characterised in that the rocker (9) is maintained in each extreme position at the relevant abutment edge (38, 39) by a respective springing catch element (44, 45).

6. A device according to one of claims 1 to 5, characterised in that the rocker (9) has a projection (40) which engages a sliding block (41, 42) provided on the inside of the hollow shaft (2).

7. A device according to one of claims 1 to 6, characterised in that the flange shaft (7) has a transverse bore (33) which connects the hollow chamber (34) in the rocker (9) to the control element (13) disposed inside the flange shaft (7).

## Revendications

1. Dispositif de déplacement angulaire relatif entre un vilebrequin et au moins un arbre à cames, dans lequel l'arbre à cames est relié par complémentarité de formes, au niveau de son faux-arbre (7) côté entrainement, au moyen d'un élément réglant (9), à un arbre creux cylindrique (2) entourant ce dernier et portant une roue d'entrainement (1) et dans lequel l'élément réglant (9) subdivise une chambre annulaire formée par l'arbre creux (2) et le faux-arbre (7) en deux chambres de travail séparées (37, 24) et l'élément réglant (9) est sollicité en alternance par de l'huile sous pression fournie par le circuit d'huile du moteur et renvoyée dans ce circuit, en fonction de la position d'un élément de commande (13) se trouvant dans le faux-arbre, caractérisé en ce que l'élément réglant (9) est conformé en balancier (9) qui d'une part est monté oscillant sur le faux-arbre (7) autour d'un axe de rotation parallèle à l'axe (11) de l'arbre à cames et d'autre part est en prise avec l'arbre creux (2), le balancier pouvant occuper deux positions extrêmes dans la chambre annulaire comprise entre l'arbre creux et le faux-arbre.

2. Dispositif selon la revendication 1, caractérisé en ce qu'un élément élastique (43) retenant le balancier (9) sous précontrainte à chacune de ses positions extrêmes est prévu dans une cavité (32) du balancier (9) qui entoure le faux-arbre (7).

3. Dispositif selon la revendication 2, caractérisé en ce que l'élément élastique (43) consiste en un ressort en étrier (43) enveloppant le faux-arbre (7) sur plus de la moitié de la longueur de la circonférence de ce dernier et prenant appui contre au moins deux emplacements à l'intérieur du balancier (9).

4. Dispositif selon l'une des revendications 1 à 3, caractérisé en ce que les deux positions extrêmes du balancier (9) sont définies par deux arêtes de butée (38, 39) de l'arbre creux (2) qui limitent le mouvement d'oscillation du balancier (9).

5. Dispositif selon l'une des revendications 1 à 4, caractérisé en ce que le balancier (9) est retenu à chacune des positions extrêmes par un élément élastique d'encliquetage (44, 45) contre l'arête correspondante de butée (38, 39).

6. Dispositif selon l'une des revendications 1 à 5, caractérisé en ce que le balancier (9) pénètre par un talon (40) dans une glissière (41, 42) réalisée sur le côté intérieur de l'arbre creux (2).

7. Dispositif selon l'une des revendications 1 à 6, caractérisé en ce que le faux-arbre (7) comporte un trou transversal (33) qui relie l'élément de commande (13) disposé à l'intérieur du faux-arbre (7) à la cavité (32) du balancier (9).

# Fig. 1

# Fig. 2